# EUROPEAN PATENT SPECIFICATION

(11) **EP 0 501 586 B1**
(45) Date of publication and mention of the grant of the patent: **02.05.1997**
(21) Application number: 92200554.1
(22) Date of filing: 25.02.1992
(51) Int. Cl.: C08G 67/02

(54) **Polymers of carbon monoxide with olefinically unsaturated compounds**
Polymere aus Kohlenmonoxid und olefinisch ungesättigten Verbindungen
Polymères de monoxyde de carbone et de composés oléfiniquement insaturés

(30) Priority: 28.02.1991 NL 9100372
(43) Date of publication of application: 02.09.1992
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL); Kragtwijk, Eric, NL-1031 CM Amsterdam (NL)

(56) References cited:
- EP-A- 0 235 865
- EP-A- 0 410 543

## Description

The invention relates to novel polymers of carbon monoxide with one or more olefinically unsaturated compounds, and to a process for their preparation.

It is known that linear polymers of carbon monoxide with one or more olefinically unsaturated aliphatic compounds in which polymers the units from carbon monoxide and the units from the olefinically unsaturated compounds are present in a substantially alternating arrangement, can be prepared by contacting the monomers with a catalyst composition containing a Group VIII metal and a phosphorus bidentate ligand of the general formula R¹R²P-R-PR³R⁴ in which R¹ to R⁴ represent identical or different optionally polar substituted aromatic hydrocarbyl groups and R represents a divalent bridging group containing at least two carbon atoms in the bridge linking the two phosphorus atoms.

For some applications it may be desirable to have such linear alternating polymers in which side groups occur which contain an optionally substituted phenyl group. The monomers eligible for application in the preparation of such polymers can be divided into the following two classes, depending on the position of the olefinically unsaturated bond in the molecule relative to the phenyl group:
I) Monomers of the general formula CH₂=CH-R⁵ in which R⁵ represents an optionally substituted phenyl group which, with one of the carbon atoms of the aromatic ring, is directly connected to a carbon atom forming part of the olefinic double bond, e.g. styrene, and
II) Monomers of the general formula CH₂=CH-R⁶-R⁷ in which R⁷ represents an optionally substituted phenyl group which, with one of the carbon atoms of the aromatic ring, is connected via a divalent aliphatic hydrocarbylene bridging group R⁶ containing at least one carbon atom in the bridge, to a carbon atom forming part of the olefinic double bond, e.g alkylbenzene.

The applicant has carried out an extensive investigation into the preparation of linear alternating polymers in which side groups occur which contain an optionally substituted phenyl group. In these investigations it was found impossible, using the conventional above-mentioned catalyst compositions, to prepare such polymers starting from a monomer mixture containing in addition to carbon monoxide one or more monomers belonging to class I. The investigations showed that such polymers can be prepared using monomers belonging to class I if in the catalyst composition the phosphorus bidentate ligand of the general formula R¹R²P-R-PR³R⁴ is replaced by a nitrogen bidentate ligand of the general formula 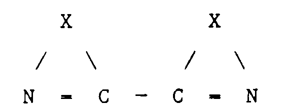 in which X represents an organic bridging group containing three or four atoms in the bridge, at least two of which are carbon atoms (cf. EP-229408, EP-A-410543).

In the course of continued research into this subject it was investigated to which extent the desired polymers can be prepared starting from a monomer mixture that in addition to carbon monoxide contains one or more monomers belonging to class II. It was found that polymers of the desired type could be prepared neither by the use of catalyst compositions containing the previously mentioned phosphorus bidentate ligand nor by the use of catalyst compositions containing the previously mentioned nitrogen bidentate ligand. It has now, however, surprisingly been found that, starting from a monomer mixture containing in addition to carbon monoxide one or more monomers belonging to class II, linear alternating polymers of the desired type can be prepared if as bidentate ligand in the catalyst composition a compound is used of the general formula R⁸R⁹P-R-PR¹⁰R¹¹ in which R⁸ to R¹¹ represent identical or different optionally polar substituted aliphatic hydrocarbyl groups and R has the previously indicated meaning. This is all the more surprising in view of the fact that the last mentioned catalyst compositions, just as the previously mentioned ones containing a phosphorus bidentate ligand of the general formula R¹R²P-R-PR³R⁴, cannot be used for the preparation of polymers starting from a monomer mixture containing in addition to carbon monoxide one or more monomers belonging to class I.

Thus linear polymers of carbon monoxide with one or more olefinically unsaturated compounds of the general formula CH₂=CH-R⁶-R⁷ in which polymers the units from carbon monoxide and the units from the olefinically unsaturated compounds are present in a substantially alternating arrangement, are novel. Using the catalyst compositions containing a bidentate ligand of the general formula R⁸R⁹P-R-PR¹⁰R¹¹, related polymers can be prepared starting from a monomer mixture containing, in addition to carbon monoxide and one or more olefinically unsaturated compounds belonging to class II, one or more olefinically unsaturated aliphatic compounds. The polymers thus prepared also have a linear structure, while the units from carbon monoxide on the one hand and the units from the olefinically unsaturated compounds on the other hand are also present therein in a substantially alternating arrangement. These polymers are also novel.

This patent application therefore relates to novel polymers of carbon monoxide with one or more olefinically unsaturated compounds, which polymers satisfy the following criteria:
a) they can be prepared by polymerization of carbon monoxide with one or more olefinically unsaturated compounds of the general formula CH₂-CH-R⁶-R⁷ and, optionally, in addition with one or more olefinically unsaturated aliphatic compounds,
b) they possess a linear structure, and
c) the units from carbon monoxide on the one hand and the units from the olefinically unsaturated compounds on the other hand are present in the polymers in a substantially alternating arrangement.

The patent application further relates to a process for the preparation of these novel polymers by contacting the monomers with a catalyst composition containing a Group VIII metal and a phosphorus bidentate ligand of the general formula R⁸R⁹P-R-PR¹⁰R¹¹.

The divalent aliphatic hydrocarbylene bridging group R⁶ occurring in the monomers of the general formula CH₂=CH-R⁶-R⁷ should have at least one carbon atom in the bridge. Examples of monomers belonging to class II in which the bridging group R⁶ contains only one carbon atom in the bridge are 3-phenylpropene(allylbenzene), 3-phenylbutene-1, 3-phenylpentene-1, 3-phenyloctene-1 and 3-methyl-3-phenylbutene-1. Examples of monomers belonging to class II in which the bridging group R⁶ contains two carbon atoms in the bridge are 4-phenylbutene-1, 4-phenylpentene-1 and 4-phenyldecene-1. The phenyl group R⁷ occurring in the monomers of the general formula CH₂=CH-R⁶-R⁷ can contain one or more optionally polar substituents, such as alkyl-, hydroxy-, alkoxy-, amino, carboxy-, alkoxycarbonyl-, cyano-, dialkylamino-, carbamyl-, dialkylcarbamyl-, sulphonic acid and sulphonate groups. Examples of such monomers belonging to class II are 1-allyl-3-methylbenzene, 1-allyl-4-hydroxybenzene (chavicol), 1-allyl-4-methoxybenzene, 2-allylaniline, 4-allylaniline, 4-allylbenzoic acid, methyl 4-allylbenzoate, 4-allylbenzonitrile, 2-allyl-N,N-dimethylaniline, 4-allylbenzamide, 4-allyl-N,N-diethylbenzamide, 4-allybenzenesulphonic acid and sodium 4-allylbenzenesulphonate.

In the compounds of the general formula CH₂=CH-R⁶-R⁷ the bridging group R₆ preferably contains only one carbon atom in the bridge. There is also preference for compounds of the general formula CH₂=CH-R⁶-R⁷ in which the group R⁷ is a non-substituted phenyl group. A very suitable monomer is allylbenzene. As regards the olefinically unsaturated aliphatic compounds, there is preference for olefinically unsaturated hydrocarbons and in particular α-olefins. A very suitable comonomer is ethene.

The monomer mixture from which the preparation of the polymers of the invention starts can contain one or more monomers of the general formula CH₂=CH-R⁶-R⁷. There is preference for the use of monomer mixtures containing only one monomer of the general formula CH₂=CH-R⁶-R⁷. If desired, the monomer mixture can additionally contain one or more olefinically unsaturated aliphatic compounds. If use is made of such monomers, there is preference for monomer mixtures which contain only one of these compounds.

As pointed out above, the polymers of the invention can be prepared by contacting the monomers with a catalyst composition containing a Group VIII metal and a phosphorus bidentate ligand of the general formula R⁸R⁹P-R-PR¹⁰R¹¹.

In this patent application, Group VIII metals are understood to be the noble metals ruthenium, rhodium, palladium, osmium, iridium and platinum, as well as the iron group metals iron, cobalt and nickel. In the catalyst compositions used in the polymer preparation according to the invention the Group VIII metal is preferably selected from palladium, nickel and cobalt. Palladium is particularly preferred as Group VIII metal. The incorporation of the Group VIII metal in the catalyst compositions preferably takes place in the form of a salt of a carboxylic acid, in particular in the form of an acetate.

In the phosphorus bidentate ligands of the general formula R⁸R⁹P-R-PR¹⁰R¹¹ which are eligible for use in the catalyst compositions, the groups R⁸ to R¹¹ preferably each do not contain more than 10 carbon atoms. Very suitable catalyst compositions for the present purpose are those which contain a phosphorus bidentate ligand in which the groups R⁸ to R¹¹ are identical alkyl groups. If desired, the groups R⁸ and R⁹ on the one hand and the groups R¹⁰ and R¹¹ on the other hand can be connected to each other by a carbon-carbon bond, so that they, together with the phosphorus atom to which they are linked, form a heterocyclic phosphorus-containing group. As regards the bridging group R in the phosphorus bidentate ligands, bridging groups are preferred containing three atoms in the bridge, of which at least two are carbon atoms. Examples of suitable bridging groups R are the -CH₂-CH₂-CH₂- group, the -CH₂-C(CH₃)₂-CH₂- group and the -CH₂-Si(CH₃)₂-CH₂- group. Worthy of mention as very suitable phosphorus bidentate ligands for applications in the present catalyst compositions are 1,3-bis(dimethylphosphino)propane, 1,3-bis(di-n-butylphosphino)-propane, and 1,3-bis(3,4-dimethoxy-1-phosphacyclopentyl)propane. The phosphorus bidentate ligands in the catalyst compositions are preferably employed in a quantity of 0.5-2 and in particular 0.75-1.5 mol per g.atom Group VIII metal.

In addition to a Group VIII metal and a phosphorus bidentate ligand, the catalyst compositions used in the preparation of the polymers of the invention also preferably contain an anion of an acid with a pKa of less than 4 and in particular an anion of an acid with a pKa of less than 2. Examples of acids with a pKa of less than 2 are mineral acids such as perchloric acid, sulphonic acids such as trifluoromethanesulphonic acid, and halocarboxylic acids such as trifluoroacetic acid. A sulphonic acid such as trifluoromethanesulphonic acid is preferred. The incorporation of the anion of an acid with a pKa of less than 4 in the catalyst composition can take place in the form of an acid and/or in the form of a salt. A nickel salt is a very suitable salt. The anion is preferably present in the catalyst compositions in a quantity of 1-100 and in particular 2-50 mol per g.atom Group VIII metal.

In addition to a Group VIII metal, a phosphorus bidentate ligand and optionally an anion of an acid with a pKa of less than 4, the catalyst compositions which are eligible to be used in the preparation of the polymers of the invention also preferably contain an organic oxidizing agent. Examples of suitable organic oxidizing agents are 1,2- and 1,4-quinones, aliphatic nitrites such as butyl nitrite and aromatic nitro compounds such as nitrobenzene and 2,4-dinitrotoluene. 1,4-quinones are preferred, and in particular 1,4-benzoquinone or 1,4-naphthoquinone. The organic oxidizing agent is preferably present in the catalyst compositions in a quantity of 5-5000 and in particular 10-1000 mol per g.atom Group VIII metal.

The preparation of the polymers of the invention is preferably carried out by contacting the monomers with a solution of the catalyst composition in a diluent in which the polymers are insoluble or virtually insoluble. Lower aliphatic alcohols, and in particular methanol, are very suitable as diluents. If desired, the polymerization can also be carried out in the gas phase. The polymerization can take place either batchwise or continuously.

The quantity of catalyst composition used in the preparation of the polymers can vary within wide limits. Per mol of olefinically unsaturated compound to be polymerized, a quantity of catalyst composition is preferably used which contains 10⁻⁷-10⁻³ and in particular 10⁻⁶ -10⁻⁴ g.atom Group VIII metal.

The preparation of the polymers is preferably carried out at a temperature of 20-150°C and a pressure of 2-150 bar and in particular at a temperature of 30-130°C and a pressure of 5-100 bar. The molar ratio of the olefinically unsaturated compounds relative to the carbon monoxide is preferably 10:1-1:10 and in particular 5:1-1:5.

The invention will now be illustrated with reference to the following examples:

### Example 1

A carbon monoxide/allylbenzene copolymer was prepared as follows. Into a stirred autoclave with a volume of 250 ml a catalyst solution was introduced consisting of:

| | |
|---|---|
| 40 ml | methanol, |
| 0.25 mmol | palladium acetate, |
| 0.3 mmol | 1,3-bis(dimethylphosphino)propane, |
| 0.5 mmol | nickel trifluoromethanesulphonate, and |
| 10 mmol | 1,4-naphthoquinone. |

After 20 ml allylbenzene was introduced into the autoclave, air was removed by evacuation. 20 bar carbon monoxide was then forced into the autoclave, after which the temperature was raised to 70°C. After 1 hour the polymerization was terminated by cooling to room temperature and releasing the pressure. The polymer formed was filtered off, washed with methanol and dried.

20 g copolymer was obtained.

### Example 2

A carbon monoxide/ethene/allylbenzene terpolymer was prepared in substantially the same way as the carbon monoxide/allylbenzene copolymer in example 1, but with the following differences:
a) the catalyst solution contained 0.3 mmol 1,3-bis(di n-butylphosphino)propane instead of 1,3-bis(dimethylphosphino)-propane,
b) 20 bar ethene was additionally forced into the autoclave, and
c) the reaction time was 1/2 hour instead of 1 hour.

21 g terpolymer was obtained.

### Example 3

A carbon monoxide/allylbenzene copolymer was prepared in substantially the same way as in example 1, but with the following differences:
a) the catalyst solution contained 0.1 mmol palladium acetate instead of 0.25 mmol and 0.12 mmol 1,3-bis(dimethylphosphino)-propane instead of 0.3 mmol,
b) the reaction temperature was 50°C instead of 70°C, and
c) the reaction time was 3 hours instead of 1 hour.

20 g copolymer was obtained.

### Example 4

A carbon monoxide/allylbenzene copolymer was prepared in substantially the same way as in example 1, but with the following differences:
a) the catalyst solution contained 0.1 mmol palladium acetate instead of 0.25 mmol and 0.12 mmol 1,3-bis(3,4-dimethoxy-l-phosphacyclopentyl)propane instead of 1,3-bis(dimethylphosphino)propane,
b) the reaction temperature was 50°C instead of 70°C, and
c) the reaction time was 1½ hours instead of 1 hour.

21 g copolymer was obtained.

### Example 5

A carbon monoxide/allylbenzene copolymer was prepared in substantially the same way as in example 4, but with the following differences:
a) the reaction temperature was 20°C instead of 50°C, and
b) the reaction time was 10 hours instead of 1½ hours.

16 g copolymer was obtained.

### Example 6

Example 1 was repeated, but with the following differences:
a) the catalyst solution contained 3 mmol 2,2'-bipyridine instead of 1,3-bis(dimethylphosphino)propane, and
b) the reaction time was 5 hours instead of 1 hour.

No polymer was formed.

### Example 7

Example 1 was repeated, but with the following differences:
a) the catalyst solution contained 0.3 mmol 1,3-bis(di n-butylphosphino)propane instead of 1,3-bis(dimethylphosphino)-propane,
b) 20 ml styrene was introduced into the autoclave instead of allylbenzene, and
c) the reaction time was 5 hours instead of 1 hour.

No polymer was formed.

Of the examples 1-7, examples 1-5 are according to the invention. In these examples, novel carbon monoxide/allylbenzene copolymers and novel carbon monoxide/ethene/allylbenzene terpolymers were prepared using catalysts containing a Group VIII metal and a phosphorus bidentate ligand of the general formula R⁸R⁹P-R-PR¹⁰R¹¹. Examples 6 and 7 fall outside the scope of the invention. They are included in the patent application for comparison. Example 6 demonstrates that a catalyst containing a Group VIII metal and a nitrogen bidentate ligand of the general formula 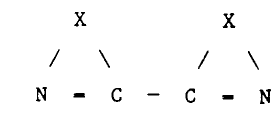 and which has been found suitable for the polymerization of carbon monoxide with monomers of the general formula CH₂=CH-R⁵ cannot be used for the preparation of the novel polymers of the invention. Example 7 demonstrates that a catalyst containing a Group VIII metal and a phosphorus bidentate ligand of the general formula R⁸R⁹P-R-PR¹⁰R¹¹ and which has been found suitable for the preparation of the novel polymers of the invention is not eligible to be employed in the polymerization of carbon monoxide with monomers of the general formula CH₂=CH-R⁵.

It was established by NMR analysis that the polymers prepared according to examples 1-5 were built up of linear chains in which the units from carbon monoxide on the one hand and the units from the olefinically unsaturated compounds on the other hand occurred in an alternating arrangement. In the polymers prepared according to example 2 the units from ethene and allylbenzene were present in a random arrangement relative to each other. It was also established by NMR analysis that an average of 20 units originating from ethene were present in the polymers prepared according to example 2 per unit originating from allylbenzene.

## Claims

1. Polymers of carbon monoxide with one or more olefinically unsaturated compounds, characterized in that,
a) they can be prepared by polymerization of carbon monoxide with one or more compounds of the general formula CH₂=CH-R⁶-R⁷ in which R⁷ represents an optionally substituted phenyl group which, with one of the carbon atoms of its aromatic ring, is connected to a divalent aliphatic hydrocarbylene bridging group R⁶ containing at least one carbon atom in the bridge, and, optionally, in addition with one or more olefinically unsaturated aliphatic compounds,
b) they possess a linear structure, and
c) the units from carbon monoxide and the units from the olefinically unsaturated compounds are present in the polymers in a substantially alternating arrangement.

2. Polymers according to claim 1, characterized in that the bridging group R⁶ in the compounds of the general formula CH₂=CH-R⁶-R⁷ contains only one carbon atom in the bridge.

3. Polymers according to claim 1 or 2, characterized in that the group R⁷ in the compounds of the general formula CH₂=CH-R⁶-R⁷ is a non-substituted phenyl group.

4. Polymers according to claim 3, characterized in that the monomer mixture contains allylbenzene as compound of the general formula CH₂=CH-R⁶-R⁷.

5. Polymers according to one or more of claims 1-4, characterized in that the monomer mixture contains one or more α-olefins as olefinically unsaturated aliphatic compounds.

6. Process for the preparation of polymers of carbon monoxide with one or more olefinically unsaturated compounds, characterized in that polymers according to claim 1 are prepared by contacting the monomers with a catalyst composition containing a Group VIII metal and a phosphorus bidentate ligand of the general formula R⁸R⁹P-R-PR¹⁰R¹¹ in which R⁸ to R¹¹ represent identical or different optionally polar substituted aliphatic hydrocarbyl groups and R represents a divalent bridging group containing at least two carbon atoms in the bridge linking the two phosphorus atoms.

7. Process according to claim 6, characterized in that the groups R⁸ to R¹¹ in the phosphorus bidentate ligand each contain a maximum of 10 carbon atoms, and that either they are identical alkyl groups, or that the groups R⁸ and R⁹ on the one hand and the groups R¹⁰ and R¹¹ on the other hand are connected to each other in the phosphorus bidentate ligand by a carbon-carbon bond, thereby forming, together with the phosphorus atom to which they are connected, a heterocyclic phosphorus-containing group.

8. Process according to claim 6 or 7, characterized in that the catalyst composition contains the phosphorus bidentate ligand in a quantity of 0.5-2 mol per g.atom Group VIII metal.

9. Process according to one or more of claims 6-8, characterized in that the catalyst composition additionally contains an anion of an acid with a pKa of less than 4, in a quantity of 1-100 mol per g.atom Group VIII metal.

10. Process according to one or more of claims 6-9, characterized in that the polymerization is carried out by contacting the monomers with a solution of the catalyst composition in a diluent in which the polymers are insoluble or virtually insoluble, at a temperature of 20-150°C, a pressure of 2-150 bar and a molar ratio of the olefinically unsaturated compounds relative to carbon monoxide of 10:1-1:10 and using a quantity of catalyst composition which per mol of olefinically unsaturated compound to be polymerized contains 10⁻⁷-10⁻³ g.atom Group VIII metal.

## Patentansprüche

1. Polymere aus Kohlenmonoxid und einer oder mehreren olefinisch ungesättigten Verbindungen, dadurch gekennzeichnet, daß
a) sie sich durch Polymerisation von Kohlenmonoxid mit einer oder mehreren Verbindungen der allgemeinen Formel CH₂=CH-R⁶-R⁷, worin R⁷ eine gegebenenfalls substituierte Phenylgruppe, die über eins der Kohlenstoffatome ihres aromatischen Rings mit einer zweiwertigen aliphatischen Kohlenwasserstoffbrückengruppe R⁶, die mindestens 1 Kohlenstoffatom in der Brücke enthält, verbunden ist, bedeutet, und gegebenenfalls zusätzlich mit einer oder mehreren olefinisch ungesättigten aliphatischen Verbindung herstellen lassen,
b) sie eine lineare Struktur besitzen und
c) die vom Kohlenmonoxid stammenden Einheiten und die von den olefinisch ungesättigten Verbindungen stammenden Einheiten in den Polymeren in einer weitgehend alternierenden Anordnung vorliegen.

2. Polymere nach Anspruch 1, dadurch gekennzeichnet, daß die Brückengruppe R⁶ in den Verbindungen der allgemeinen Formel CH₂=CH-R⁶-R⁷ nur ein Kohlenstoffatom in der Brücke enthält.

3. Polymere nach Anspruch 1 oder 2, dadurch gekennzeichnet, daß die Gruppe R⁷ in den Verbindungen der allgemeinen Formel CH₂=CH-R⁶-R⁷ eine unsubstituierte Phenylgruppe darstellt.

4. Polymere nach Anspruch 3, dadurch gekennzeichnet, daß die Monomermischung als Verbindung der allgemeinen Formel CH₂=CH-R⁶-R⁷ Allylbenzol enthält.

5. Polymere nach einem oder mehreren der Ansprüche 1-4, dadurch gekennzeichnet, daß die Monomermischung als olefinisch ungesättigte aliphatische Verbindungen ein oder mehrere α-Olefine enthält.

6. Verfahren zur Herstellung von Polymeren aus Kohlenmonoxid und einer oder mehreren olefinisch ungesättigten Verbindungen, dadurch gekennzeichnet, daß man Polymere gemäß Anspruch 1 dadurch herstellt, daß man die Monomere mit einer Katalysatorzusammensetzung, die ein Metall der Gruppe VIII und einen zweizähnigen Phosphorliganden der allgemeinen Formel R⁸R⁹P-R-PR¹⁰R¹¹, worin R⁸ bis R¹¹ gleiche oder verschiedene, gegebenenfalls polarsubstituierte aliphatische Kohlenwasserstoffgruppen bedeuten und R eine zweiwertige Brückengruppe mit mindestens zwei Kohlenstoffatomen in der die beiden Phosphoratome verbindenden Brücke bedeutet, enthält, in Berührung bringt.

7. Verfahren nach Anspruch 6, dadurch gekennzeichnet, daß die Gruppen R⁸ und R¹¹ in dem zweizähnigen Phosphorliganden jeweils höchstens 10 Kohlenstoffatome enthalten und daß sie entweder gleiche Alkylgruppen darstellen oder daß die Gruppen R⁸ und R⁹ einerseits und die Gruppen R¹⁰ und R¹¹ andererseits in dem zweizähnigen Phosphorliganden über eine Kohlenstoff-Kohlenstoff-Bindung miteinander verbunden sind und so zusammen mit dem Phosphoratom, mit dem sie verbunden sind, eine heterocyclische phosphorhaltige Gruppe bilden.

8. Verfahren nach Anspruch 6 oder 7, dadurch gekennzeichnet, daß die Katalysatorzusammensetzung den zweizähnigen Phosphorliganden in einer Menge von 0,5-2 Mol pro Grammatom Metall der Gruppe VIII enthält.

9. Verfahren nach einem oder mehreren der Ansprüche 6-8, dadurch gekennzeichnet, daß die Katalysatorzusammensetzung zusätzlich ein Anion einer Säure mit einem pKa-Wert unter 4 in einer Menge von 1100 Mol pro Grammatom Metall der Gruppe VIII enthält.

10. Verfahren nach einem oder mehreren der Ansprüche 6-9, dadurch gekennzeichnet, daß man die Polymerisation so ausführt, daß man die Monomere in einem Verdünnungsmittel, in dem die Polymere unlöslich oder praktisch unlöslich sind, bei einer Temperatur von 20-150°C, einem Druck von 2-150 Bar und einem Molverhältnis von olefinisch ungesättigten Verbindungen zu Kohlenmonoxid von 10:1 - 1:10 und unter Verwendung einer Menge der Katalysatorzusamensetzung, die pro Mol zu polymerisierende olefinisch ungesättigte Verbindung 10⁻⁷-10⁻³ Grammatom Metall der Gruppe VIII enthält, mit einer Lösung der Katalysatorzusammensetzung in Berührung bringt.

## Revendications

1. Polymères du monoxyde de carbone avec un ou plusieurs composés insaturés, caractérisés en ce que
a) on peut les préparer par la polymérisation du monoxyde de carbone avec un ou plusieurs composés oléfiniquement insaturés de la formule générale CH₂=CH-R⁶-R⁷ dans laquelle R⁷ représente un groupe phényle qui est attaché, par l'un des atomes de carbone de son noyau aromatique à un groupe de pontage du type hydrocarbylène aliphatique divalent, R⁶ contenant au moins un atome de carbone dans le pont et, éventuellement, en outre, avec un ou plusieurs composés aliphatiques oléfiniquement insaturés,
b) ils possèdent une structure linéaire et
c) les unités tirant leur origine du monoxyde de carbone, d'une part et les unités tirant leur origine des composés oléfiniquement insaturés, d'autre part, sont présentes dans les polymères selon un agencement sensiblement alternant.

2. Polymères suivant la revendication 1, caractérisés en ce que le groupe de pontage R⁶ dans les composés de la formule générale CH₂=CH-R⁶-R⁷ contient seulement un atome de carbone dans le pont.

3. Polymères suivant la revendication 1 ou 2, caractérisés en ce que le groupe R⁷ dans les composés de la formule générale CH₂=CH-R⁶-R⁷ est un radical phényle non substitué.

4. Polymères suivant la revendication 3, caractérisés en ce que le mélange des monomères contient de l'allylbenzène à titre de composé de la formule générale CH₂=CH-R⁶-R⁷.

5. Polymère suivant une ou plusieurs des revendications 1 à 4, caractérisés en ce que le mélange de monomères contient une ou plusieurs α-oléfines à titre de composés aliphatiques oléfiniquement insaturés.

6. Procédé de préparation de polymères du monoxyde de carbone avec un ou plusieurs composés oléfiniquement insaturés, caractérisé en ce que l'on prépare les polymères suivant la revendication 1 par la mise en contact des monomères avec une composition catalytique contenant un métal du groupe VIII et un ligand bidentate du phosphore de la formule générale R⁸R⁹P-R-PR¹⁰R¹¹, dans laquelle les symboles R⁸ à R¹¹ représentent des radicaux hydrocarbyle aliphatiques à substitution polaire éventuelle, identiques ou différents et R représente un groupe de pontage divalent contenant au moins deux atomes de carbone dans le pont liant les deux atomes de phosphore.

7. Procédé suivant la revendication 6, caractérisé en ce que les groupes R⁸ à R¹¹ dans le ligand bidentate du phosphore contiennent chacun un maximum de 10 atomes de carbone et qu'ils représentent des radicaux alkyle identiques, ou bien les groupes R⁸ et R⁹, d'une part et les groupes R¹⁰ et R¹¹, d'autre part, sont liés mutuellement dans le ligand bidentate du phosphore par une liaison carbone à carbone, de manière à ainsi former, ensemble avec l'atome de phosphore auquel ils sont liés, un radical contenant du phosphore hétérocyclique.

8. Procédé suivant la revendication 6 ou 7, caractérisé en ce que la composition catalytique contient le ligand bidentate du phosphore en une proportion de 0,5 à 2 moles par atome-gramme de métal du groupe VIII.

9. Procédé suivant une ou plusieurs des revendications 6 à 8, caractérisé en ce que la composition catalytique contient en outre un anion d'un acide qui possède un pKa inférieur à 4, en une proportion de 1 à 100 moles par atome-gramme de métal du groupe VIII.

10. Procédé suivant une ou plusieurs des revendications 6 à 9, caractérisé en ce que l'on entreprend la polymérisation par la mise en contact des monomères avec une solution de la composition catalytique dans un diluant dans lequel les polymères sont insolubles ou virtuellement insolubles, à une température de 20 à 150°C, sous une pression de 2 à 150 bars et avec un rapport molaire des composés oléfiniquement insaturés au monoxyde de carbone de 10:1 à 1:10 et en utilisant une proportion de composition catalytique qui, par mole de composé oléfiniquement insaturé à polymériser, contient 10⁻⁷ à 10⁻³ atome-gramme de métal du groupe VIII.
